# EUROPÄISCHE PATENTSCHRIFT

(11) **EP 2 958 763 B1**
(45) Veröffentlichungstag und Bekanntmachung des Hinweises auf die Patenterteilung: **22.08.2018**
(21) Anmeldenummer: 14704604.9
(22) Anmeldetag: 17.02.2014
(51) Int. Cl.: B60H 1/00

(54) **VERFAHREN UND SYSTEM ZUR VORKONDITIONIERUNG EINER HEIZ- UND/ODER KÜHLEINHEIT IN EINEM KRAFTFAHRZEUG**
METHOD AND SYSTEM FOR PRECONDITIONING A HEATING AND/OR COOLING UNIT IN A MOTOR VEHICLE
PROCÉDÉ ET SYSTÈME DE CONDITIONNEMENT PRÉALABLE D'UNE UNITÉ DE CHAUFFAGE ET/OU DE REFROIDISSEMENT DANS UN VÉHICULE AUTOMOBILE

(30) Priorität: 19.02.2013 DE 102013202601
(43) Veröffentlichungstag der Anmeldung: 30.12.2015
(73) Patentinhaber: Bayerische Motoren Werke Aktiengesellschaft, 80809 München (DE)
(72) Erfinder: NIRSCHL, Michael, 84036 Kumhausen (DE); SATZGER, Peter, 86899 Landsberg am Lech (DE)
(86) Internationale Anmeldenummer: PCT/EP2014/053039
(87) Internationale Veröffentlichungsnummer: WO 2014/128088

(56) Entgegenhaltungen:
- EP-B1- 2 117 857
- WO-A1-2007/023340
- DE-A1-102005 004 950
- DE-A1-102008 023 416
- FR-A1- 2 780 144

## Beschreibung

Die Erfindung bezieht sich auf ein Verfahren sowie eine entsprechende Vorrichtung zur Vorkonditionierung einer Heiz- und/oder Kühleinheit eines Kraftfahrzeugs im Stillstand, wobei die Heiz- und/oder Kühleinheit ihre Energie zum Heizen und/oder Kühlen aus einem elektrischen Speicher bezieht, nach dem Oberbegriff des Anspruchs 1.

Um im Stillstand befindliche Fahrzeuge optimal temperieren zu können, sind derzeit verschiede Vorrichtungen und Verfahren bekannt. Bspw. offenbart die DE 10 2008 023 416 A1 eine Vorrichtung, das zur Vorkonditionierung einer Heiz- und/oder Kühleinheit eines Kraftfahrzeugs im Stillstand geeignet ist. Weiter offenbart die DE 197 31 071 A1 eine Anlage zum Temperieren des Fahrzeuginnenraum eines Kraftfahrzeugs im Stillstand, bei dem die im Fahrzeug noch vorhandene Restwärme einer Wärmequelle und Restkälte einer Kältequelle genutzt wird.

Da die Nutzung von Restwärme und/oder Restkälte nur möglich ist, wenn die dafür genutzten Wärmequellen und/oder Kältequellen sich in einem Zustand befinden, in dem sie Wärme und/oder Kälte abgeben können, in der Regel also unmittelbar nach (längerem) Betrieb des Kraftfahrzeugs, sind derartige Systeme oft nicht ausreichend, um eine optimale Temperierung des Fahrzeuginnenraums im Stillstand zu ermöglichen.

Neben den genannten Vorrichtungen zum Temperieren des Fahrzeuginnenraums im Stillstand werden zum Heizen oder Kühlen des Fahrzeugs im Stillstand oft Zuheiz- bzw. Standheizgeräte bzw. elektrisch angetriebene Kühleinrichtungen verwendet, die Ihre Energie in der Regel unter Zuhilfenahme von Verbrennungsmaschinen oder thermischen Energiespeichern erhalten. Derartige Heiz- und/oder Kühleinheit haben einen erheblichen Kraftstoffverbrauch und damit verbunden hohe Schadstoffemissionen.

Neue Fahrzeugkonzepte, insbesondere Hybridfahrzeuge, legen den Ansatz nahe, die notwendige Energie zum Betreiben der Heiz- und/oder Kühleinheiten im Stillstand aus den vorhandenen elektrischen Energiespeichern zu nutzen. So offenbart die DE 10 2005 004 950 A1 eine Klimaanlage für ein Hybridfahrzeug, bei der die Vorklimatisierung mittels eines bereits im System serienmäßig vorhandenen elektrischen Kältemittelverdichters, welcher von einer Traktionsbatterie des Fahrzeugs angesteuert wird, ermöglicht wird. Derartige Systeme haben zwar den Vorteil, dass eine Vorklimatisierung ohne Emissionen aus einem Verbrennungsmotor oder einem Brennstoffheizgerät möglich sind, allerdings ist die Vorklimatisierung aufgrund der Speicherkapazitäten der elektrischen Speicher nur für einen begrenzten Zeitraum möglich. Sobald der Ladezustand unter einem vorgegebenen Grenzwert liegt oder fällt ist keine Vorklimatisierung (mehr) möglich, da ansonsten der Betrieb des Kraftfahrzeugs gefährdet sein könnte. Dies führt zu erheblichen Komforteinbußen für den Fahrer.

Aus der EP 2 117 857 B1 ist bereits ein Verfahren zur Vorklimatisierung eines Kraftfahrzeugs im Stillstand mittels einer Heiz- und/oder Kühleinheit, welche ihre Energie aus einem elektrischen Speicher des Fahrzeugs bezieht, bekannt, wobei die Heiz- und/oder Kühleinheit in zumindest zwei Leistungsstufen betrieben werden kann. Dabei wird bei anfänglicher Aktivierung der Heiz- und/oder Kühleinheit des abstellten Fahrzeugs die Heiz- und/oder Kühleinheit anfänglich in einer ersten Leistungsstufe mit geringem Energieverbrauch betrieben, und erst beim Entriegeln oder Öffnen einer Fahrzeugtür von der ersten Leistungsstufe in die zweite Leistungsstufe mit höherem Energieverbrauch geschaltet.

Aufgabe der Erfindung ist es, oben genanntes Verfahren hinsichtlich des Energieverbrauchs unter Berücksichtigung einer optimalen Klimatisierung des Fahrzeugs weiter zu verbessern.

Diese Aufgabe wird durch ein Verfahren nach Patentanspruch 1 und ein System nach Anspruch 7 gelöst. Vorteilhafte Weiterbildungen ergeben sich aus den abhängigen Ansprüchen.

Grundgedanke der Erfindung ist, dass bei einer Vorklimatisierung im Fahrzeugstillstand (bzw. bei verriegeltem und verlassenem Fahrzeug), bei der die Energie zur Vorklimatisierung des Fahrzeuginnenraums aus elektrischen Speichern bezogen wird, grundsätzlich nicht zuviel Energie verbrauchen darf, um weiterhin eine vollständige Funktionsfähigkeit des Fahrzeugs gewährleisten zu können. Wird jedoch nur eine abgeschwächte Innenraumvorkonditionierung vorgenommen, verliert der Kunde durch das Öffnen einer oder mehrerer Fahrzeugtüren einen großen Teil des Vorkonditionierungseffektes. Der Innenraum fühlt sich aufgrund der zu wenig vortemperierten Oberflächen sehr schnell zu warm oder zu kalt an.

Darauf basierend ist das erfindungsgemäßen Verfahren zur Vorkonditionierung einer Heiz- und/oder Kühleinheit in einem Kraftfahrzeug im Stillstand, bei dem die Heiz- und/oder Kühleinheit ihre Energie zum Heizen und/oder Kühlen aus einem elektrischen Speicher bezieht, grundsätzlich derart ausgestaltet, dass im Fahrzeugstillstand die Heiz- und/oder Kühleinheit auf ein Signal einer Fernstarteinrichtung anfänglich in einer ersten Leistungsstufe aktiviert wird und erst in Abhängigkeit vorgegebener Bedingungen von der ersten Leistungsstufe in eine zweite Leistungsstufe der Heiz- und/oder Kühleinheit geschaltet wird. Erfindungsgemäß ist die erste Leistungsstufe derart ausgestaltet, dass bei zumindest nahezu geschlossenen Belüftungsklappen durch entsprechende Ansteuerung der Heiz- und/oder Kühleinheit innerhalb des Heiz- und/oder Kühlkreislaufes eine interne Vorkonditionierung der Luft zum Erreichen einer vorgegebenen Solltemperatur vorgenommen wird. Mit anderen Worten ausgedrückt wird in der ersten Leistungsstufe nur bzw. nahezu nur die Luft innerhalb der Heiz- und/oder Kühleinheit entsprechend temperiert. Durch das vollständige oder nahezu vollständige Schließen der Belüftungsklappen wird verhindert, dass die bereits vortemperierten Luft in den Fahrzeuginnenraum entweicht und die Heiz- und/oder Kühleinheit wieder mit der neu angesaugten Luftmenge, die gerade zu Beginn der Temperierung kaum vorkonditioniert ist, von vorn beginnen muss.

Die Aktivierung der Vorkonditionierung der Heiz- und/oder Kühleinheit mittels der Fernstarteinrichtung (in der ersten Leistungsstufe) kann dabei auf verschiedene Arten erfolgen. So kann bspw. die Fernstarteinrichtung Teil einer separaten Funkfernbedienung oder in der Schlüsseleinheit integriert sein. Alternativ kann die Fernstarteinrichtung auch Teil einer Software-Funktion sein, die in einem Smartphone oder einem Tablet-PC integriert ist.

Dieses Verfahren bietet sich insbesondere bei Fahrzeugen mit Elektroantrieb an, bei denen die elektrische Energie für den Antrieb aus einem elektrischen Speicher bezogen wird.

Weiter wird bei dem erfindungsgemäßen Verfahren vorteilhafterweise in der ersten Leistungsstufe zum internen Vorkonditionieren der Heiz- und/oder Kühleinheit das Gebläse deaktiviert oder nur mit geringer Leistung betrieben, da ein Betrieb aufgrund der (nahezu) geschlossenen Belüftungsklappen nicht notwendig ist. Durch das Deaktivieren des Gebläses oder des Betreiben des Gebläses mit geringer Leistung wird auch keine oder nur wenig zusätzliche Energie verbraucht.

Wird während der ersten Leistungsstufe zum internen Vorkonditionieren der Heiz- und/oder Kühleinheit zum Erreichen der vorgegebenen Solltemperatur die Solltemperatur oder ein mit der Solltemperatur korrelierender Wert erreicht oder überschritten, kann in einer vorteilhaften Weiterbildung der Erfindung die Ansteuerung der Heiz- und/oder Kühleinheit zumindest zeitweise beendet oder unterbrochen werden. Weicht bei beendeter oder unterbrochener Ansteuerung der Heiz- und/oder Kühleinheit während der ersten Leistungsstufe die Temperatur innerhalb der Heiz- und/oder Kühleinheit um mehr als einen vorgegebenen Differenzwert von der Solltemperatur oder einem mit der Solltemperatur korrelierenden Wert ab, oder ist ein bestimmtes Zeitintervall abgelaufen, wird vorteilhafterweise die Ansteuerung wieder aktiviert, so dass sichergestellt werden kann, dass eine ausreichende Vorkonditionierung der Heiz- und/oder Kühleinheit vorliegt, und damit eine schnelle Klimatisierung des Fahrzeuginnenraums bei Aktivierung der zweiten Leistungsstufe erreicht wird.

Im Umschaltzeitpunkt von der ersten Leistungsstufe in die zweite Leistungsstufe liegt ein weiterer Aspekt der Erfindung. Da der Umschaltzeitpunkt derart gewählt werden sollte, dass der Fahrer, sobald er in das Fahrzeug einsteigt, das Gefühl vermittelt bekommen soll, dass seinem Wunsch nach Vorklimatisierung des Fahrzeuginnenraums Rechnung getragen wurde, wird in einer vorteilhaften Ausgestaltung der Erfindung dann von der ersten Leistungsstufe in die zweite Leistungsstufe geschaltet, wenn der Kofferraum oder eine Fahrzeugtür, vorzugsweise die Fahrer-Fahrzeugtür entriegelt oder geöffnet wird. Je nach Ausgestaltung des Entriegelungssystems des Kraftfahrzeugs, findet eine Entriegelung des Fahrzeugs statt, wenn der Fahrer ein entsprechendes Bedienelement einer Fernbedienungseinheit betätigt, wenn eine Funkeinheit innerhalb eines vorgegebenen Bereichs um das Fahrzeug detektiert wird, oder wenn das Fahrzeug mittels eines Schlüssels manuell am Schloss einer Tür oder des Kofferraums entriegelt wird. Ob eine Aktivierung der zweiten Leistungsstufe beim Entriegeln des Fahrzeugs oder beim Öffnen einer Fahrzeugtür bzw. der Fahrer-Fahrzeugtür erfolgt, kann fest vorgegeben werden, oder in Abhängigkeit vom Ladezustand des elektrischen Speichers erfolgen, wobei bei geringem Ladezustand der Umschaltvorgang von der ersten Leistungsstufe in die zweite Leistungsstufe erst möglichst spät erfolgen sollte, vorzugsweise erst beim Öffnen der Fahrertür des Kraftfahrzeugs.

Um sicherstellen zu können, dass der Fahrer beim Einsteigen in das Fahrzeug einen optimal vortemperierten Fahrzeuginnenraum vorfindet bzw. vermutet, muss dem Fahrer dieses Gefühl durch eine entsprechende zweite Leistungsstufe vermittelt werden. Vorteilhafterweise ist die zweite Leistungsstufe derart ausgestaltet, dass die bis dahin zumindest nahezu geschlossenen Belüftungsklappen geöffnet werden und/oder die Gebläseleistung angehoben wird, so dass die innerhalb der Heiz- und/oder Kühleinheit vortemperierte Luft in den Fahrzeuginnenraum austritt. Der Fahrer hat dadurch sofort die angeforderte kalte oder warme Luft an den Ausströmern zur Verfügung, ohne dass im Vorfeld eine große Energiemenge notwendig ist. Subjektiv gesehen erlebt der Fahrzeugnutzer somit einen größeren Effekt als bei einer aus dem Stand der Technik bekannten Vorklimatisierung mit nur geringem Energieverbrauch.

Um weiter sicherstellen zu können, dass die Luft innerhalb der Heiz- und/oder Kühleinheit optimal vorkonditioniert wird, ist das erfindungsgemäße System zur Vorkonditionierung der Heiz- und/oder Kühleinheit im Kraftfahrzeug im Stillstand gemäß dem oben beschriebenen Verfahren derart ausgestaltet, dass innerhalb der Heiz- und/oder Kühleinheit eine Luftrückführung zum Zurückführen der konditionierten Luft zum Ansaugtrakt des Gebläses vorgesehen ist. Durch diese Luftrückführung ergibt sich ein zumindest nahezu geschlossener Luftkreislauf, durch den die Luft während der ersten Leistungsstufe zirkulieren kann.

Vorteilhafterweise kann durch eine entsprechende Ausgestaltung des Systems auch sichergestellt werden, dass lediglich in der ersten Leistungsstufe die vorkonditionierte Luft innerhalb der Heiz- und/oder Kühleinheit zirkulieren kann. So kann vorteilhafterweise am Eingang der Luftrückführung ein Überdruckventil vorgesehen sein, welches sich bei entsprechend großem Luftdruck öffnet, so dass die vorkonditionierte Luft durch die Luftrückführung zum Ansaugtrakt des Gebläses strömbar ist. Dieser entsprechend hohe Luftdruck stellt sich ein, wenn die Belüftungsklappen zumindest nahezu geschlossen sind und somit der Weg in den Fahrzeuginnenraum versperrt ist.

Alternativ kann anstelle des Überdruckventils auch ein elektrisch ansteuerbares Ventil am Eingang der Luftrückführung vorgesehen sein, welches während der ersten Leistungsstufe zumindest zeitweise teilweise oder vollständig geöffnet ist.

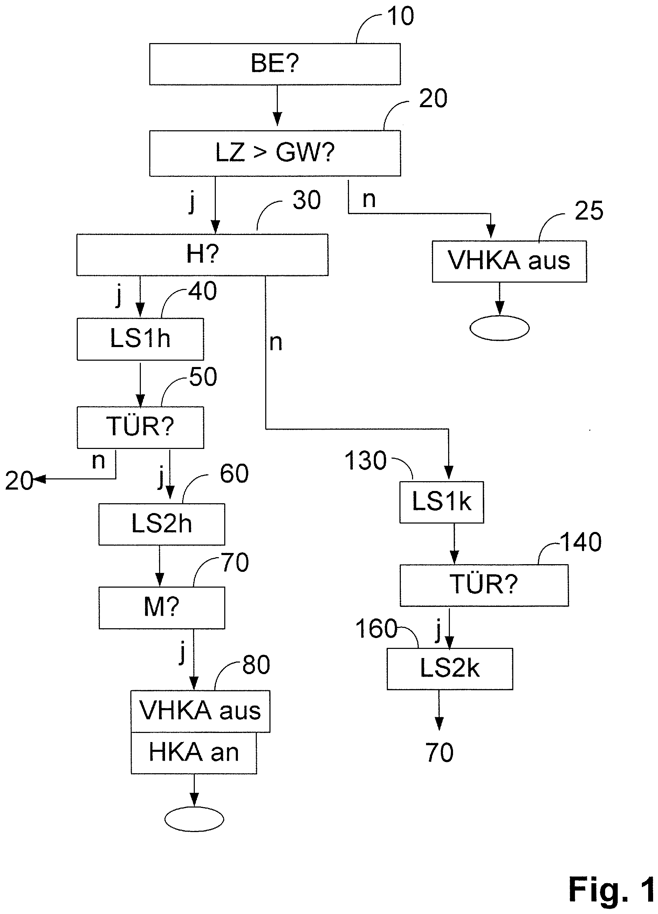

Das erfindungsgemäße Verfahren und eine mögliche Vorrichtung zur Durchführung des erfindungsgemäßen Verfahrens werden nun anhand eines Ausführungsbeispiels näher erläutert. Dabei zeigt
Fig. 1 ein vereinfachtes beispielhaftes Ablaufdiagramm des erfindungsgemäßen Verfahrens zur Vorkonditionierung einer Heiz- Kühleinheit eines Kraftfahrzeugs im Stillstand, und
Fig. 2 ein vereinfachtes System zur Durchführung oben genannten Verfahrens.

Grundsätzlich wird in diesem Beispiel davon ausgegangen dass die Heiz-Kühleinheit die Energie zur Vorklimatisierung des Fahrzeuginnenraums aus einem elektrischen Speicher bezieht, der zugleich für das Starten des Kraftfahrzeugs und teilweise auch für einen Elektromotor, der als Antriebseinheit dient, verwendet wird. Das erfindungsgemäße Verfahren ist dabei in einer Steuereinheit zur Steuerung und/oder Regelung der Heiz-Klimaeinheit als Routine implementiert.

Das Verfahren zur Vorkonditionierung der Heiz- Kühleinheit des Kraftfahrzeugs im Stillstand wird im Schritt 10 gestartet, wenn vom Fahrer mittels eines fahrzeugexternen Bedienelements BE die Heiz-Kühleinheit zur Vorklimatisierung seines Fahrzeugs im Stillstand aktiviert wird. Das Bedienelement BE kann in einer separaten Funkfernbedienung oder in einer Schlüsseleinheit integriert sein, wobei ein gemeinsames oder getrenntes Bedienelement BE zum Starten eines Heizvorgangs bzw. zum Starten eines Kühlvorgangs vorgesehen sein kann. Eine weitere Aktivierungsmöglichkeit besteht durch ein Smartphone. Der Einfachheit halber wird im Folgenden nur von einem Bedienelement BE gesprochen.

Nachdem der Fahrer durch Betätigung des Bedienelements BE seinen Wunsch zur Vorklimatisierung zum Ausdruck gebracht hat, wird im Schritt 20 überprüft, ob der Ladezustand LZ des zur Vorklimatisierung des Fahrzeugs verwendeten elektrischen Speichers einen vorgegebenen Grenzwert GW überschreitet. Der Grenzwert GW wird dabei so vorgegeben, dass eine Aktivierung der Heiz-Kühleinheit zu keiner Beeinträchtigung des Startvorgangs des Fahrzeugs führt. Unterschreitet der Ladezustand LZ des elektrischen Speichers den vorgegebenen Grenzwert GW, wird zum Schritt 25 übergegangen. Die Heiz- Kühleinheit wird nicht aktiviert bzw. falls sie vorher bereits aktiviert war, wird sie im Schritt 25 deaktiviert. Das Verfahren bzw. die Routine wird beendet.

Überschreitet der Ladezustand LZ des elektrischen Speichers den Grenzwert GW, wird im Schritt 30 überprüft, ob der Fahrer ein Aufheizen H oder Abkühlen des Fahrzeuginnenraums wünscht. Dies kann z.B. dadurch festgestellt werden, in dem überprüft wird, ob der Fahrer das Bedienelement BE zum Heizen oder das Bedienelement BE zum Kühlen betätigt hat. Alternativ kann bei Aktivierung des Bedienelements BE ein voreingestellter Sollwert mit dem Istwert der Fahrzeuginnentemperatur oder einer vergleichbaren Temperatur verglichen werden und daraus abgeleitet werden, ob ein Heiz- oder ein Kühlmodus erforderlich ist.

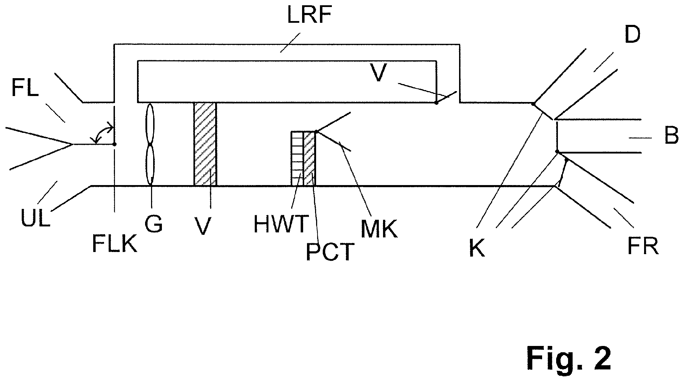

Wünscht der Fahrer ein Aufheizen H des Fahrzeuginnenraums, wird im Schritt 40 eine erste Heiz-Leistungsstufe LS1h der Heiz-Kühleinheit aktiviert. Diese erste Heiz-Leistungsstufe LS1h ist derart ausgestaltet, dass bei zumindest nahezugeschlossenen Belüftungsklappen die Heiz-Kühleinheit durch entsprechende Ansteuerung innerhalb des Heizkreislaufs zum Erreichen einer vom Fahrer vorgegebenen Solltemperatur intern vorkonditioniert wird. Gleichzeitig wird zum internen Vorkonditionieren das Gebläse der Heiz-Kühleinheit nur mit geringer Leistung betrieben, so dass nur wenig Energie benötigt wird, gleichzeitig aber sichergestellt wird, dass eine ausreichende Luftzirkulierung innerhalb der Heiz- Kühleinheit gewährleistet ist. Damit die Luft innerhalb der Heiz- Kühleinheit gut zirkulieren kann, ist optional eine - in der Fig. 2 näher beschriebene - Luftrückführung zum Zurückführen der erwärmten Luft zum Ansaugtrakt des Gebläses der Heiz-Kühleinheit vorgesehen.

Nach Aktivierung der ersten Heiz-Leistungsstufe LS1h wird im nächsten Schritt 50 abgefragt, ob die Fahrertür TÜR geöffnet wird. Solange die Fahrertür TÜR nicht geöffnet wird, springt die Routine immer wieder zum Schritt 20 zurück. Dadurch wird kontinuierlich der Ladezustand LZ des elektrischen Speichers abgefragt, so dass die Vorklimatisierung ggf. unterbrochen werden kann, falls der Ladezustand LZ unter den Grenzwert GW fällt. Ist der Ladezustand LZ ausreichend, wird die Heiz- Kühleinheit entsprechend in der ersten Heiz-Leistungsstufe LS1h betrieben.

Hier nicht dargestellt, aber ebenfalls denkbar ist, dass im Schritt 20 überprüft wird, ob die vorkonditionierte Luft bereits die Solltemperatur erreicht hat. Ist dies der Fall, kann die erste Heiz- Leistungsstufe zumindest vorübergehend deaktiviert werden, um weiter Energie einsparen zu können.

Sobald im Schritt 50 erkannt wird, dass die Fahrertür TÜR des Fahrzeugs geöffnet wird, wird zum Schritt 60 übergegangen. Dort wird eine zweite Heiz-Leistungsstufe LS2h der Heiz-Kühleinheit aktiviert. Diese zweite Heiz-Leistungsstufe LS2h ist derart ausgestaltet, dass nun die nahezu geschlossenen Belüftungsklappen geöffnet werden und ggf. die Gebläseleistung angehoben wird, so dass der Fahrer beim Betreten des Fahrzeuginnenraums mit der bereits auf seine Bedürfnisse vortemperierte Luft angeblasen wird. Dadurch wird im zumindest das Gefühl vermittelt, dass der Fahrzeuginnenraum bereits nach seinen Wünschen vortemperiert ist.

Nach Aktivierung der zweiten Heiz-Leistungsstufe LS2h wird im nächsten Schritt 70 abgefragt, ob das Fahrzeug bzw. der Motor M gestartet wurde. Sobald der Motor M gestartet wird, wird vom Schritt 70 in den Schritt 80 übergangen, dort die Vorklimatisierung VHKA beendet und die herkömmliche Klimatisierung HKA aktiviert.

Wünscht der Fahrer kein Aufheizen H des Fahrzeuginnenraums, sondern ein Kühlen, wird im Schritt 130 eine erste Kühlleistungsstufe LS1k aktiviert. Diese erste Kühl-Leistungsstufe LS1k ist derart ausgestaltet, dass analog dem Heizen bei zumindest nahezugeschlossenen Belüftungsklappen die Heiz-Kühleinheit durch entsprechende Ansteuerung innerhalb des Heiz- Kühlkreislaufs zum Erreichen einer vom Fahrer vorgegebenen Solltemperatur intern vorkonditioniert wird. Gleichzeitig wird zum internen Vorkonditionieren das Gebläse der Heiz-Kühleinheit nur mit geringer Leistung betrieben, so dass nur wenig Energie benötigt wird, gleichzeitig aber sichergestellt wird, dass eine ausreichende Luftzirkulation innerhalb der Heiz- Kühleinheit gewährleistet ist.

Nach Aktivierung der ersten Kühl-Leistungsstufe LS1k wird im nächsten Schritt 140 abgefragt, ob die Fahrertür TÜR geöffnet wird. Solange die Fahrertür TÜR nicht geöffnet wird, springt die Routine immer wieder zum Schritt 20 zurück. Dadurch wird kontinuierlich der Ladezustand LZ des elektrischen Speichers abgefragt, so dass die Vorklimatisierung ggf. unterbrochen werden kann, falls der Ladezustand LZ unter den Grenzwert GW fällt. Ist der Ladezustand LZ ausreichend, wird die Heiz- Kühleinheit in der ersten Kühl-Leistungsstufe LS1s betrieben.

Sobald im Schritt 140 erkannt wird, dass die Fahrertür TÜR des Fahrzeugs geöffnet wird, wird zum Schritt 160 übergegangen. Dort wird eine zweite Kühl-Leistungsstufe LS2k der Heiz-Klimaeinheit aktiviert. Diese zweite Kühl-Leistungsstufe LS2k ist derart ausgestaltet, dass die Heiz-Klimaeinheit den Fahrzeuginnenraum nun mit hoher Leistung abkühlt. Nach Aktivierung der zweiten Kühl-Leistungsstufe LS2k wird zum Schritt 70 übergangen und die Routine - wie bereits oben beschrieben- weitergeführt bzw. mit Starten des Motors M beendet. Dadurch wird ein optimales Kühlen des Fahrzeuginnenraums unter Berücksichtigung des Fahrzeuginnenraums gewährleistet.

Das hier beschriebene Verfahren soll nur ein stark vereinfachtes Beispiel sein. Natürlich können noch weitere Systemparameter abgefragt und dementsprechend erforderliche Systemeingriffe vorgenommen werden. Diese Betriebsstrategie kann auch mit anderen Strategien, z. B. mit Belüftungsstrategien über ein Absenken der Fenster, Öffnen des Schiebdachs, Aktivierung der Sitzheizung und/oder mit Strategien zur Batteriekühlung im Stillstand gekoppelt werden, wobei jedoch immer auf den Ladezustand des elektrischen Speichers geachtet werden muss.

Die Fig. 2 zeigt nun ein vereinfachtes System zur Durchführung oben genannten Verfahrens. Dabei ist in vereinfachter Form eine herkömmliche Heiz- und Kühleinheit dargestellt, die in Abhängigkeit vorgegebener Bedingungen durch entsprechende Stellung der Frischluftklappe FKL entweder Frischluft FL oder Umluft UL mittels des nachgeordneten Gebläses G ansaugt. Die angesaugte Luft wird in Abhängigkeit von der Einstellung einer Mischklappe MK über einen Verdampfer V und einer dem Verdampfer V nachgeordneten Einheit aus Heiz-Wärmetauscher HTW und optional einem sog. PCT-Element PCT geführt und dadurch entsprechend der Anforderung erwärmt oder abgekühlt.

Bei herkömmlich ausgestalteten Heiz-Klimaanlagen wird nun die temperierte Luft direkt durch entsprechende Stellung der Defrost-, Belüftungs- und Fußraumklappen K über den Defrost- D und/oder Belüftungs- B und/oder Fußraumkanal F in den Fahrzeuginnenraum geleitet.

Um in der ersten Leistungsstufe bei zumindest nahezu geschlossenen Belüftungsklappen K eine gute Vorkonditionierung der Luft innerhalb der Heiz-Kühleinheit durch entsprechende Ansteuerung erreichen zu können, ist innerhalb der Heiz- Kühleinheit eine Luftrückführung LRF zum Zurückführen der (konditionierten) erwärmten und/oder abgekühlten Luft zum Ansaugtrakt des Gebläses G vorgesehen. Somit bildet sich ein nahezu geschlossener Luftkreislauf, indem die Luft zirkuliert und somit optimal vortemperiert wird.

Um sicherstellen zu können, dass in der zweiten Leistungsstufe und auch bei normalem Betrieb der Heiz-Klimaanlage die Luft durch die Belüftungsklappen K in den Fahrzeuginnenraum strömt und nicht wieder durch die Luftrückführung zum Ansaugtrakt des Gebläses G, ist am Eingang der Luftrückführung ein Ventil V vorgesehen, welches sich in der ersten Leistungsstufe öffnet oder geöffnet wird, so dass die erwärmte oder abgekühlte Luft durch die Luftrückführung LRF zum Ansaugtrakt des Gebläses G strömbar ist. Dieses Ventil kann als einfaches Überdruckventil, welches sich bei Erreichen eines bestimmten Luftdrucks öffnet, oder als elektrisch ansteuerbares Ventil ausgestaltet sein. Das elektrisch ansteuerbare Ventil kann dabei in Abhängigkeit von der aktuellen Leistungsstufe bzw. dem angeforderten Bedingungen entsprechend geöffnet, geschlossen oder in einer beliebigen Zwischenstellung gehalten werden.

## Patentansprüche

1. Verfahren zur Vorkonditionierung einer Heiz- und/oder Kühleinheit in einem Kraftfahrzeug im Stillstand, wobei die Heiz- und/oder Kühleinheit ihre Energie zum Heizen und/oder Kühlen des Fahrzeuginnenraums aus einem elektrischen Speicher bezieht, und wobei im Fahrzeugstillstand die Heiz- und/oder Kühleinheit auf ein Signal einer Fernstarteinrichtung in einer ersten Leistungsstufe aktiviert wird und in Abhängigkeit vorgegebener Bedingungen von der ersten Leistungsstufe in eine zweite Leistungsstufe der Heiz- und/oder Kühleinheit geschaltet wird, **dadurch gekennzeichnet, dass** die erste Leistungsstufe (LS1h, LS1k) derart ausgestaltet ist, dass bei zumindest nahezu geschlossenen Belüftungsklappen (K) durch entsprechende Ansteuerung der Heiz- und/oder Kühleinheit der Heiz- und/oder Kühlkreislaufes zum Erreichen einer vorgegebenen Solltemperatur intern vorkonditioniert wird.

2. Verfahren nach Anspruch 1, **dadurch gekennzeichnet, dass** in der ersten Leistungsstufe (LS1h, LS1k) zum internen Vorkonditionieren des Heiz- und/oder Kühlkreislaufes das Gebläse (G) deaktiviert oder nur mit geringer Leistung betrieben wird.

3. Verfahren nach Anspruch 1 oder 2, **dadurch gekennzeichnet, dass** während der ersten Leistungsstufe (LS1h, LS1k) zum internen Vorkonditionieren des Heiz- und/oder Kühlkreislaufes zum Erreichen der vorgegebenen Solltemperatur die Ansteuerung der Heiz- und/oder Kühleinheit zumindest zeitweise beendet oder unterbrochen wird, wenn innerhalb der Heiz- und/oder Kühleinheit oder in den Luftkanälen die Solltemperatur erreicht oder überschritten ist.

4. Verfahren nach Anspruch 3, **dadurch gekennzeichnet, dass** bei beendeter oder unterbrochener Ansteuerung der Heiz- und/oder Kühleinheit während der ersten Leistungsstufe (LS1h, LS1k) die Ansteuerung wieder aktiviert wird, wenn die Temperatur innerhalb des Heiz- und/oder Kühlkreislaufes um mehr als einen vorgegebenen Differenzwert von der Solltemperatur abweicht und/oder wenn ein vorgegebenes Zeitintervall abgelaufen ist.

5. Verfahren nach einem der vorangegangenen Ansprüche, **dadurch gekennzeichnet, dass** von der ersten Leistungsstufe (LS1h, LS1k) in die zweite Leistungsstufe (LS2h, LS2k) geschaltet wird, wenn eine Fahrzeugtür, vorzugsweise die Fahrer-Fahrzeugtür (TÜR) entriegelt oder geöffnet wird.

6. Verfahren nach einem der vorangegangenen Ansprüche, **dadurch gekennzeichnet, dass** die zweite Leistungsstufe (LS2h, LS2k) derart ausgestaltet ist, dass die zumindest nahezu geschlossenen Belüftungsklappen (K) geöffnet werden und/oder die Gebläseleistung angehoben wird.

7. System zur Vorkonditionierung einer Heiz- und/oder Kühleinheit eines Kraftfahrzeugs im Stillstand, welche gemäß einem Verfahren nach einem der Ansprüche 1 - 6 steuerbar ist, **dadurch gekennzeichnet, dass** innerhalb des Heiz- und/oder Kühlkreislaufes eine Luftrückführung (LRF) zum Zurückführen der erwärmten und/oder abgekühlten Luft zum Ansaugtrakt des Gebläses (G) vorgesehen ist und am Eingang der Luftrückführung (LRF) ein Überdruckventil (V) vorgesehen ist, welches sich bei entsprechend großem Luftdruck öffnet, so dass die erwärmte oder abgekühlte Luft durch die Luftrückführung (LRF) zum Ansaugtrakt des Gebläses (G) strömbar ist.

## Claims

1. A method for preconditioning a heating and/or cooling unit in a motor vehicle while said vehicle is at a standstill, wherein the heating and/or cooling unit draws its energy for heating and/or cooling the vehicle interior from an electrical store, and wherein, while the vehicle is at a standstill, the heating and/or cooling unit is activated in a first power stage in response to a signal of a remote starting device and is switched from the first power stage to a second power stage of the heating and/or cooling unit depending on specified conditions, **characterised in that** the first power stage (LS1 h, LS1k) is designed in such a way that, with the ventilation flaps (K) at least almost closed, the heating and/or cooling circuit is internally preconditioned to reach a specified target temperature by appropriate control of the heating and/or cooling unit.

2. A method according to claim 1, **characterised in that** the fan (G) is deactivated or is operated only at low power in the first power stage (LS1h, LS1k) for internal preconditioning of the heating and/or cooling circuit.

3. A method according to claim 1 or 2, **characterised in that** during the first power stage (LS1h, LS1k) for internal preconditioning of the heating and/or cooling circuit in order to reach the specified target temperature the control of the heating and/or cooling unit is ended or interrupted at least temporarily in the event that within the heating and/or cooling unit or in the air channels the target temperature is reached or exceeded.

4. A method according to claim 3, **characterised in that** in the case that the control of the heating and/or cooling unit is ended or interrupted during the first power stage (LS1h, LS1k), the control is reactivated if the temperature within the heating and/or cooling circuit deviates by more than a predefined difference value from the target temperature and/or if a predefined time interval has elapsed.

5. A method according to any one of the preceding claims, **characterised in that** a switch is made from the first power stage (LS1h, LS1k) to the second power stage (LS2h, LS2k) if a vehicle door, preferably the driver's vehicle door (TUR) is unlocked or opened.

6. A method according to any one of the preceding claims, **characterised in that** the second power stage (LS2h, LS2k) is designed in such a way that the at least almost closed ventilation flaps (K) are opened and/or the fan power is increased.

7. A system for preconditioning a heating and/or cooling unit of a motor vehicle when said vehicle is at a standstill, which unit can be controlled in accordance with a method according to any one of claims 1-6, **characterised in that** an air return (LRF) is provided within the heating and/or cooling circuit for returning the heated and/or cooled air to the intake passage of the fan (G), and a pressure relief valve (V) is provided at the inlet of the air return (LRF), which pressure relief valve opens at a correspondingly great air pressure, such that the heated or cooled air can flow through the air return (LRF) to the intake passage of the fan (G).

## Revendications

1. Procédé de conditionnement préalable d'une unité de chauffage et/ou de refroidissement dans un véhicule à l'arrêt, l'unité de chauffage et/ou de refroidissement soutirant son énergie permettant de chauffer et/ou de refroidir l'habitacle du véhicule d'un accumulateur électrique, et, lorsque le véhicule est à l'arrêt, l'unité de chauffage et/ou de refroidissement étant activée dans une première étape de puissance, en réponse à un signal d'un dispositif de démarrage à distance, et, étant commutée, de la première étape de puissance dans une seconde étape de puissance en présence de conditions prédéfinies,
**caractérisé en ce que**
la première étape de puissance (LS1h, LS1k) est réalisée de sorte que, lorsque des volets d'aération (K) sont au moins approximativement fermé, une commande correspondante de l'unité de chauffage et/ou de refroidissement, permette de conditionné de façon préalable en interne le circuit de chauffage et/ou de refroidissement pour obtenir une température de consigne prédéfinie.

2. Procédé conforme à la revendication 1,
**caractérisé en ce que**
lors de la première étape de puissance (LS1h, LS1k), pour permettre un conditionnement préalable interne du circuit de chauffage et/ou de refroidissement, le ventilateur (G) est désactivé ou actionné uniquement à faible puissance.

3. Procédé conforme à la revendication 1 ou 2,
**caractérisé en ce que**
pendant la première étape de puissance (LS1h, LS1k), pour permettre un conditionnement préalable interne du circuit de chauffage et/ou de refroidissement de façon à atteindre la température de consigne prédéfinie, la commande de l'unité de chauffage et/ou de refroidissement est stoppée ou interrompue au moins temporairement, lorsque, la température de consigne a été atteinte ou dépassée à la partie interne de l'unité de chauffage et/ou de refroidissement et/ou dans les canaux d'aération.

4. Procédé conforme à la revendication 3,
**caractérisé en ce que**
lorsque la commande de l'unité de chauffage et/ou de refroidissement est stoppée ou interrompue pendant la première étape de puissance (LS1h, LS1k), la commande est à nouveau activée lorsque la température à la partie interne du circuit de chauffage et/ou de refroidissement diffère de plus d'une valeur de différence prédéfinie de la température de consigne et/ou lorsqu'un intervalle de temps prédéfini s'est écoulé.

5. Procédé conforme à l'une des revendications précédentes,
**caractérisé en ce que**
de la première étape de puissance (LS1h, LS1k) dans la seconde étape de puissance (LS2h, LS2k) une commutation est effectuée lorsqu'une porte du véhicule, de préférence, la porte du conducteur (TÜR) est déverrouillée ou ouverte.

6. Procédé conforme à l'une des revendications précédentes,
**caractérisé en ce que**
la seconde étape de puissance (LS2h, LS2k) est réalisée en ouvrant le volet d'aération (K) au moins approximativement fermé et/ou en augmentant la puissance du ventilateur.

7. Système de conditionnement préalable d'une unité de chauffage et/ou de refroidissement d'un véhicule à l'arrêt pouvant être commandé par la mise en oeuvre d'un procédé conforme à l'une des revendications 1 à 6,
**caractérisé en ce qu'**
il est prévu à la partie interne du circuit de chauffage et/ou de refroidissement un recyclage d'air (LRF) permettant de renvoyer l'air chauffé et/ou refroidi vers la ligne d'aspiration du ventilateur (G), et à l'entrée du recyclage d'air (LRF) une soupape de surpression (V) qui s'ouvre lorsque la pression d'air a une valeur suffisante de sorte que l'air chauffé ou refroidi puisse circuler dans le recyclage d'air (LRF) vers la ligne d'aspiration du ventilateur (G).
